# EUROPEAN PATENT APPLICATION

(11) **EP 1 106 967 A1**
(43) Date of publication of application: **13.06.2001**
(21) Application number: 99204046.9
(22) Date of filing: 30.11.1999
(51) Int. Cl.: G01C 21/34

(54) **Navigation system**

(71) Applicant: Mannesmann VDO Aktiengesellschaft, 60388 Frankfurt am Main (DE)
(72) Inventor: Klein, Bernhard, 35576 Wetzlar (DE)
(74) Representative: Klein, Thomas, Dipl.-Ing.

(57) **Abstract**

A route planning system is provided with various interlinked facilities, including a user I/O facility, a route planning facility, a position determination facility, and a destination and institutional table facility. In particular, the route planning facility is arranged for under control of a set of interval point requests received from a user, and one or more timing indications each associated to a respective interval point request, generating a route listing that accommodates a route to be travelled to the set of interval points and associated timing indications.

## Description

The invention relates to a route planning system provided with various interlinked facilities, including a user I/O facility, a route planning facility, a position determination facility, and a destination and institutional table facility. US Patent 4,951,212 discloses a system wherein a user may enter a request for selecting a destination that is categorized according to its purpose of use, such as a supermarket. The system will then select the most suitable supermarket and guide the driver in accordance with the selection. The present inventor has recognized that this prior art organization is essentially static, because it is impossible to enter dynamic data that could be co-determinative for the route to be taken and/or the time instant at which or the period during which one or more interval points will be visited.

In consequence, amongst other things, it is an object of the present invention to provide a route planning system that allows to enter a set of interval points each provided with associated timing indications and which system then will generate a route and associated timing schedule that accommodate to the set of interval points and their associated timing indications.

Now therefore, according to one of its aspects the invention is characterized in that said route planning facility is arranged for under control of a set of interval point requests received from a user, and one or more timing indications each associated to a respective interval point request, generating a route listing that accommodates a route to be travelled to the set of interval points and associated timing indications.

The invention also relates to a method for operating a route planning system as claimed in Claim 1. Further advantageous aspects of the invention are recited in dependent Claims.

These and further aspects and advantages of the invention will be discussed more in detail hereinafter with reference to the disclosure of preferred embodiments, and in particular with reference to the appended Figures that show:
Figure 1 shows an overall diagram of a system according to the invention;
Figure 2 is an input example representing a user's requirements;
Figure 3 is the result output presented by the system;
Figure 4 is an applicable flow chart.

The invention allows the dynamic introduction of interval points into a planned route. This may be done either before or during the actual trip. An interval point means herein a location that the user should want to visit for a particular purpose. Such could relate to a particular location, for example a business contact identified by name or location, or a particular facility such as a gasoline station, a restaurant or a hotel that may either be specified as such or as through its category, or various other locations. Each interval point may get a timing indication, such as a wanted time instant (a business meeting at 1500 sharp), or a time interval (such as the time necessary for effecting a particular delivery), or a relative instant with respect to another time (such as before 2200 hours, or at most a certain time after a previous stop has taken place to accommodate to legal requirements that prescribe certain rest periods to be taken, or even "as soon as possible"). The system may present the user with a correct result that corresponds to the user's wishes, or present a short list of solutions that would represent passable outcomes, or even output an "impossible" result that in its turn could encompass proposals for lessening the user's requirements. The outcome may be inexact, such as due to the fact that the time available for lunch is somewhat less than the user's inputted wish.

The system needs a data bank that stores addresses and other informations regarding institutions, such as restaurants, inns, hotels, etcetera. Furthermore, the system must be able to estimate travel times between two locations. Prior art systems donot have the possibility to enter a destination category and even less a particular event or activity, such as "overnight stay".

Prior art systems need all locations to be entered at the start of the journey. For detailed route planning it is however advantageous that certain activities such as lunch or overnight stay could be entered independently from the specifying of a particular location. The entering should necessitate no more than the activity itself and the preferred time. For a more exact specification, also the interval to be spent, or the (relative) instant of departure from the location in question could be either specified or prestored. A similar effect is attained by specifying the time length up to the occurrence of the specified event, such as "have lunch after two hour's driving". This will prove especially advantageous if a user will find out requirements that had been overlooked earlier, or that come up in an unforeseen manner, such a through a vehicle part that breaks down. This should allow the entering of an ASAP request category.

The invention allows to enter a location category or a specified activity in combination with an arrival time or time period. This allows the system to select from a list of destination locations a particular one that meets the category or activity, and that will be reached at the specified or calculated instant. The driver may accept or reject the location. In the first case, the interval point will be entered into the list of points to be visited. In the alternative, the system will search for a further location that meets the specified requirements. If such destination is inserted in combination with an associated stay time or departure instant into in the list of locations to be visited, the system may calculate the effects thereof on the arrival time(s) at later destinations. If one or more later destinations can then no longer be reached at an appropriate instant, such as only after business hours have terminated, the user may get a signalization thereof. If the user does not specify a departure time, and such cannot be calculated from other indications, such as the time of stay, the departure instant will be calculated by the system. Such may take into account the arrival instant at a next-following location.

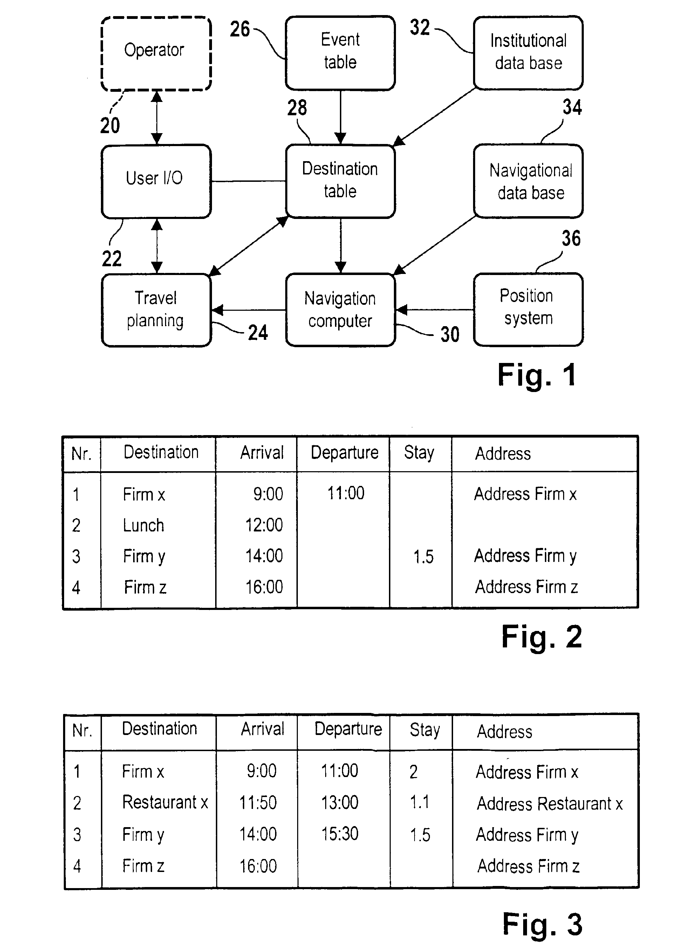

Figure 1 shows an overall diagram of a system according to the invention, that by way of example has nine subsystems, as follows. Block 20 symbolizes a user person who wants to be guided by the system. The user interfaces bidirectionally to the system's I/O that may have various hardware and software facilities such as keyboard, mouse, speech, other audio, and display. Block 32 represents an Institutional Data Base that may store various entries, such as representing hotels, restaurants or other facilities, together with associated data such as location, business hours, and actual services present at those facilities. Block 34 represents a Navigational Data Base that may comprise a road network, together with physical distances or travel time distances between representative points, road classification, and others. Block 36 represents a Position System that detects an actual position of the vehicle, such as through using a well known GPS system. Block 26 represents an Event Table, such as a road block or jam situation that has been communicated by a higher level authority such as as a **R**adio **D**ata **S**ystem, and which event may cause certain destination to be no longer reacheable, or only in a delayed manner, or which may necessitate the vehicle to take a detour.

Block 28 represents a Destination Table that contains the destinations and associated timing indications, such as entered by the user through block 22, and subject to information from the Travel Planning in block 24, the Institutional Data Base in Block 32, and the Event Table in block 26. Block 30 represents a Navigational Computer that is fed with the Destination Table from block 28, with the Navigational Data Base from block 34, and with the Position from block 36; from these informations it can figure out a route to be taken, which route contains various interval points and furthermore, timing indications associated to the various Interval Points. Block 24 represents the Travel Planning that is fed by the information from the navigational computer 30, and which block 24 furthermore bidirectionally interfaces to the Destination Table in Block 28, and to the User I/O in Block 22. The Travel Planning will update the Destination Table if it fails to find a correct solution for attaining all Interval Points, and it will signal the User what Route is to be taken, as well as will signal the above Failure to allow the user to modify the set of Interval Points and/or associated timing indications.

Figure 2 is an input example representing a user's requirements. As shown, the user wants to visits three firms x, y, z, each with its address provided, and also wants to have lunch at 12 o'clock. Furthermore, the interval at firm x has its Arrival Time and Departure Time fully specified, the interval at firm y has its Arrival Time and its Stay length specified, and the interval at firm z has only its Arrival Time specified. Various items of the above may have been inputted into the system by speech from the user person, either before the commencement of the actual travelling, or even during the actual travel.

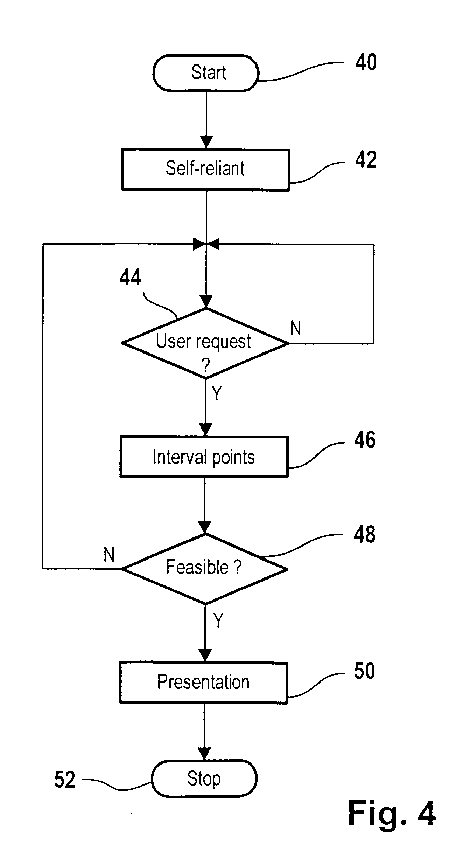

Figure 3 is the result output presented by the system as meeting the user's requirements listed in Figure 2. First, the intervals at the three firms x, y and z have their Arrival, Departure and Stay times fully specified as far as feasible. Furthermore, the system has sought for a suitable restaurant that would best meet the requirements of an Arrival Time near 12 o'clock, and a Stay Time that would be sufficient for lunch. Using the Institutional Data Base 32 and Navigational Data Base 34 of Figure 1, it has come up with Restaurant q at an address that would give one hour's and ten minutes' time, which was considered long enough. Also, the associated Departure Time has been presented. In other cases, the system would signal that another sequence among the three firms to be visited would be necessary. For example, it could be necessary to have lunch between the visits to firms y and z, respectively, if the available restaurant was more down the road, or the system could signal that the requirements could not be met. In such case, the user could indicate another sequence of the visits, or could even relinquish the requirement for a specified sequence, and leave it to be determined by the system itself. Still another case could occur, where the system would for example find that the three firms were too far from each other, given the various required Stay lengths, to be visited on a single day.

Figure 4 is an applicable flow chart of the operation of the route planning system according to the invention. In block 40, the system is started, and the necessary hardware and software facilities are assigned. In block 42, the system self-reliantly executes various tasks, such as for determining its actual location. In block 44, it checks for the presence of user requests. If absent (N), a waiting loop is executed. If all requests had been received (Y), the system in block 46 goes to find all required Interval Points. The user may, after the specifying of the interval points, be asked to expressly signal that all requests have effectively been presented. Here again, the speech input may be used as an alternative to a keyboard. In block 46 the set of Interval Points is checked for feasibility. Feasibility may be absolute or expressed by the user person. If feasible (Y), these points are presented in block 50 to the user, and the operation is finished in block 52 by relinquishing the assigned facilities to other tasks. If not feasible (N) is found in block 46, this may be signalled either by a user signal not shown originating from the presentation in block 50, or generated by the system itself. Then the system goes back to block 44, in which user requests may be stricken or amended, until either a suitable route will be found, or until the user terminates the operation. Otherwise, the system will stop operating, with only the presentation maintained.

During the actual travel, it remains possible to amend the schedule. This amending may be effected by the user person, in the form of speech, keystrokes or otherwise, and may pertain to the inserting or deleting of interval points, the amending of wanted stay times, and various other. Also, the guiding of the vehicle may be changed in a dynamic manner, such as under the influence of external events or situations, such as traffic jams or rainstorms, or rather the discontinuance of such events or adverse situations. Such aspects may be dynamically communicated to the vehicle by known systems such as **R**adio **D**ata **S**ystem-**TMC**, **M**obile**R**adio, and others. This arrival of new information may require the driver to maintain to some degree a continuing and dynamic dialog with the overall system. Such could require the driver to change plans, because the dynamic situation may have any type of influence on the planned route.

The person skilled in the art of route planning will recognize further policies to be followed within the ambit of the present invention, the scope of which has justfully been determined by the appended Claims hereinafter.

## Claims

1. A route planning system provided with various interlinked facilities, including a user I/O facility, a route planning facility, a position determination facility, and a destination and institutional table facility, characterized in that said route planning facility is arranged for under control of a set of interval point requests received from a user, and one or more timing indications each associated to a respective interval point request, generating a route listing that accommodates a route to be travelled to the set of interval points and associated timing indications.

2. A system as claimed in Claim 1, characterised in that one or more timing indications indicate a stay length at an associated interval point or an absolute or relative clock time value associated to a requested presence at an associated interval point.

3. A system as claimed in Claim 1, characterised by having reject recognition means for after said generating of a first route listing detecting a user reject or amendment signal, and reactivating said route planning facility for thereupon generating an amended route listing that differs from said first route listing.

4. A system as claimed in Claim 1, characterised by having failure signalization means for under control of a failure with respect to accommodating a route to said set of interval points and associated timing indications signalizing a failure signal and subsequently enabling the user to modify the set of interval points and associated timimg indications.

5. A system as claimed in Claims 3 or 4, characterised by having a speech reception facility for allowing a user person to enter amendment and/or reject signals in the form of speech.

6. A system as claimed in Claim 1, characterised in that said generating is effected in a dynamic manner to allow for changes in an actual position and/or external conditions.

7. A system as claimed in Claim 5, characterised by further having receiving means for receiving external condition signalizations from an overall long-range signalization or broadcast system (such as RDS-TMC or Mobile Radio).

8. A method for operating a route planning system as claimed in Claim 1, that is provided with various interlinked facilities, including a user I/O facility, a route planning facility, a position determination facility, and a destination and institutional table facility, characterized in that said method comprises the steps of user-entering into the system a set of interval point requests, and one or more timing indications each associated to a respective interval point request, and user-inducing said system to generate a route listing that accommodates a route to be travelled to the set of interval points and associated timing indications.
